# EUROPÄISCHE PATENTSCHRIFT

(11) **EP 2 678 849 B1**
(45) Veröffentlichungstag und Bekanntmachung des Hinweises auf die Patenterteilung: **06.12.2017**
(21) Anmeldenummer: 12709813.5
(22) Anmeldetag: 15.02.2012
(51) Int. Cl.: G09B 9/00, G09B 9/30

(54) **SIMULATOR ZUR AUSBILDUNG EINES TEAMS, INSBESONDERE ZUR AUSBILDUNG EINER HUBSCHRAUBERBESATZUNG**
SIMULATOR FOR TRAINING A TEAM, IN PARTICULAR FOR TRAINING A HELICOPTER CREW
SIMULATEUR POUR FORMER UNE ÉQUIPE, EN PARTICULIER POUR FORMER UN ÉQUIPAGE D'HÉLICOPTÈRE

(30) Priorität: 22.02.2011 DE 102011012018
(43) Veröffentlichungstag der Anmeldung: 01.01.2014
(73) Patentinhaber: Rheinmetall Defence Electronics GmbH, 28309 Bremen (DE)
(72) Erfinder: GROTELÜSCHEN, Volker, 28857 Syke (DE)
(74) Vertreter: Greif, Thomas
(86) Internationale Anmeldenummer: PCT/EP2012/052551
(87) Internationale Veröffentlichungsnummer: WO 2012/113686

(56) Entgegenhaltungen:
- EP-A1- 1 739 642
- DE-A1-102010 016 113
- US-A1- 2002 049 510
- US-A1- 2002 052 724
- US-A1- 2007 069 977
- US-A1- 2010 305 724

## Beschreibung

Die Erfindung betrifft einen Simulator zur Ausbildung von wenigstens einer Person.

Bekannterweise werden zur Ausbildung von Personen in Teams oftmals Simulatoren eingesetzt, bei denen die zu trainierenden Personen in einer virtuellen Welt agieren. Dies kann beispielsweise wie für Besatzungen von Fluggeräten, Land- und Seefahrzeugen erfolgen. Um die Handhabung eines komplexen Systems zu trainieren, wird einer physikalischen Nachbildung der Fahrzeug- oder Fluggerätekabine eine virtuelle Realität auf z.B. einer sie umgebenden sphärische Projektion dargestellt. Die Größe beispielsweise einer Hubschrauber-Kabine und die sich ständig in Bewegung befindenden Augenpunkte der Crew-Mitglieder führen zu der Notwendigkeit, eine große sphärische Projektionsfläche von 100°(+10°/- 90°) x 360° zu konstruieren. Der Durchmesser kann dabei 8 Meter betragen und 12 Sicht-Kanäle scheinen notwendig und realistisch zu sein. Zu bedienende Instrumente werden dann als ein dem originalen System entsprechenden MMI (Mensch-Maschinen-Inferface) nachgebildet, beispielsweise eine Waffe inklusive Kraftrückkopplung oder eine Rettungswinde inklusive Seilkräfte.

Sollen taktische Operationen trainiert werden, so ist es bekannt, als Display VR-Brillen (Virtual Reality-Brillen) zu verwenden und die Systeme als vereinfachtes MMI nachzubilden. Sowohl die Kabine als auch das zu bedienende Gerät, beispielsweise eine Waffe, werden dann virtuell nachgebildet und in der VR-Brille dargestellt.

Während bei der ersten Lösung vorteilhaft ein reales System physikalisch nachgebildet wird, lässt sich die virtuelle zweite Lösung zu einem attraktiven Preis realisieren. Werden als VR-Brillen Head-Mounted-Displays mit teilfiransparenten Displays (See-through-Technologie) genutzt, so können auch die Systeme und die Crew-Mitglieder gesehen werden. Es würde aber auch der Trainingsraum, d.h. die nachgebildete Kabine, zu sehen sein. Zudem kann es zu visuellen Artefakten durch falsche Überlagerungen der maskierten Fenster bzw. Öffnungen für die Außensicht und den anwesenden Crew-Mitgliedern kommen.

Der Erfindung liegt daher die Aufgabe zugrunde, einen Simulator zu schaffen, der die Vorteile beider Systeme bietet.

Erfindungsgemäß wird diese Aufgabe durch einen Simulator gemäß dem unabhängigen Anspruch 1 gelöst. Vorteilhafte Weiterbildungen des Simulators ergeben sich aus den Unteransprüchen 2-13.

Der erfindungsgemäße Simulator umfasst einen Trainingsraum, dessen innere Begrenzungsfläche mit einer Farbe versehen ist, die für eine farbbasierte Bildfreistellung geeignet ist. Dieser Simulator umfasst wenigstens ein teiltransparentes Head-Mounted-Display (HMD), das mit zwei Videokameras für stereoskope Aufnahmen und einem Headtracker versehen ist, der die Feststellung der Blickrichtung des jeweiligen Trägers ermöglicht. Der Simulator umfasst ferner eine Simulationsrecheneinheit mit zwei Bildgeneratoren für eine stereoskope Darstellung von virtuellen Bildern auf dem wenigstens einen Head-Mounted-Display, wobei die dargestellten virtuellen Bilder durch einen Videomischer erzeugt werden, der Mittel zur zeitgleichen Mischung der Aufnahmen der Videokameras des wenigstens einen Head-Mounted-Displays mit gerechneten virtuellen Bildern in der jeweiligen Blickrichtung aufweist. Der Videomischer ermöglicht es somit, die Aufnahmen der Videokameras eines Displays zeitgleich mit einem errechneten virtuellen Szenario zu mischen und einem Teammitglied durch die Blue-Box-Technik seine individuelle Sicht auf das Szenario zu geben. Dabei ermöglichen die zwei Büdgeneratoren eine differierende Darstellung für jedes Auge einer Person.

Der erfindungsgemäße Simulator eignet sich zur Ausbildung von wenigstens einer Person, wobei jedoch vorzugsweise mehrere Personen gleichzeitig im Trainingsraum trainieren. Daher kann der Simulator wenigstens zwei teiltransparente Head-Mounted-Displays umfassen, auf welchen von der Simulationsrecheneinheit zeitgleich virtuelle Bilder für jede Person erzeugbar sind. Jedes zu trainierende Teammitglied erhält dann ein Head-Mounted-Display, das jeweils mit zwei Videokameras für stereoskope Aufnahmen und einem Headtracker versehen ist, der die Feststellung der Blickrichtung des betreffenden Trägers ermöglicht. Die zwei Bildgeneratoren der Simulationsrecheneinheit erzeugen dann für jedes Display und somit für jedes Teammitglied eine stereoskope Darstellung des Szenarios aus dem individuellen Blickwinkel der Person.

Die Darstellung auf dem Display eines Teammitglieds erfolgt so, dass zunächst mit der Videokamera ein Bild des Raumes aus der Perspektive des Teammitglieds aufgenommen wird. Dieses Bild besteht aus den Bildern der realen Gegenstände, die vor dem Blue Screen der Blue Box angeordnet sind, und den restlichen Flächen, die in der codierten Farbe sind. Zeitgleich wird entsprechend der vom Headtracker festgestellten Blickrichtung eine virtuelle Szene des Trainingsraumes generiert. Für die Flächen in der codierten Farbe wird nun die entsprechende virtuelle Szene mittels des Videomischers überlagert. Dabei bleiben die realen Gegenstände und Personen erhalten. Dem zu trainierenden Teammitglied wird so auf dem Display ein Bild dargestellt, das aus einer virtuellen Szene mit eingebetteten real existierenden Personen oder Gegenständen kombiniert ist.

Die Erfindung kombiniert somit (im Gegensatz zum bekannten Stand der Technik - siehe zum Beispiel die Schriften US2002/049510, US2010/305724 oder EP1739642) ein Blue-Box-Verfahren mit der Verwendung von teiltransparenten Head-Mounted-Displays, die eine sogenannte Video-see-through-Technologie nutzen. So können die trainierenden Personen nicht nur das sie umgebende System sehen, das durch die Blue-Box-Technik simuliert wird, sondern die Personen können auch andere Personen sehen und mit ihnen gemeinsame Operationen trainieren. Dies hat den großen Vorteil, dass in einer virtuellen Umgebung auch real vorhandene Gegenstände dargestellt und in ihrer Handhabung trainiert werden können. Dabei können sogar die eigenen Hände bei der Bedienung eines Gerätes beobachtet und kontrolliert werden. So werden die Vorteile und Stärken der sogenannten Augmented Virtual Reality in einem Simulator zum Trainieren von Personen genutzt.
Insbesondere kann es sich bei den trainierenden Personen um Mitglieder einer Hubschrauberbesatzung handeln, die in der Kabine agieren (Helicopter Rear Cabin Crew - H/C Crew). Typischerweise besteht ein solches Team aus bis zu vier Personen bzw. Soldaten, wobei drei Maschinengewehrschützen und ein Bordmechaniker oder ein Bordwart vorgesehen sind. Nachzubilden sind dann beispielsweise eine Rettungswinde (Winchman), das Außenlastverfahren und der Bereich eines Bordsicherungssoldaten (Door Gunner). Auszubilden sind in einem solchen Simulator wenigstens die sichere Handhabung der Systeme (Waffe und Winde) und die effektive und sichere Nutzung der Systeme im Einsatz. Dabei können die einzelnen Arbeitsbereiche und Trainingsobjekte gemeinsam in einem Simulator untergebracht sein und genutzt werden, es kann jedoch auch getrennt trainiert werden.

In dem Blue-Box-Verfahren wird dann auf einem beispielsweise blauen Hintergrund eine virtuelle Szene gerechnet. Diese virtuelle Szene wäre hier die H/C-Kabine und das durch die Türen bzw. Fenster oder auch dem Cockpit zu sehende überflogene Gelände. Der blau gefärbte Trainingsraum ist hierbei der notwendige Hintergrund. Damit man einen blauen Hintergrund aus den individuellen Blickwinkeln der Crew-Mitglieder erhält, werden die HMDs mit digitalen Video-Kameras versehen. Das von den Kameras aufgezeichnete Bild wird an den erfassten blauen Flächen mit einer virtuellen Szene aus demselben Blickwinkel überlagert.

Visuelle Artefakte in Form von falschen Überlagerungen sind nicht zu erwarten, weil die anwesenden Crew-Mitglieder den blauen Hintergrund abdecken. Erfolgt der Vorgang in Echtzeit, können die Crew-Mitglieder sich nicht nur sehen, sondern sie können auch direkt miteinander interagieren, wobei dies in einer virtuellen und flexibel konfigurierbaren Umgebung erfolgt.

In einem Ausführungsbeispiel der Erfindung ist der gesamte Trainingsraum beweglich im Raum ausgeführt, so dass Manöver beispielsweise eines Hubschraubers mit einem Bewegungssystem auf die Kabine übertragen werden können. Vibrationen können ebenfalls auf den Boden der Kabine und damit auf die trainierende Besatzung übertragen werden. Dabei kann es zweckmäßig sein, den Boden von den Seitenwänden des Trainingsraums zu entkoppeln, um nachteilige Auswirkungen der Vibrationen auf das Blue-Box-Verfahren vermeiden zu können.

Grundsätzlich ermöglicht es die Kombination von realen und virtuellen Informationen, beliebige real existierende Gegenstände in die virtuelle Trainingsumgebung einzubinden. Auch ist es einem Trainee möglich, sich selbst zu sehen, weil er/sie ebenfalls von den Video-Kameras erfasst und zu einem real existierenden Bestandteil der virtuellen Trainingsumgebung wird. Real existierende Personen und Ausrüstungsgegenstände können so in eine virtuelle Umwelt eingebettet werden.

In einem Ausführungsbeispiel der Erfindung weist der Trainingsraum daher wenigstens ein Trainingsobjekt auf, an dem eine Person ausgebildet werden soll. Bei dem Trainingsobjekt kann es sich beispielsweise um eine Waffe und/oder eine Winde, jeweils als Original oder Modell, handeln. Bei einer Winde kann das Seil dieser Winde an eine Bewegungsplatte angekoppelt sein, die innerhalb einer Ebene in zwei Richtungen bewegbar ist, wobei die Bewegungsplatte durch die Simulationsrecheneinheit ansteuerbar ist. So lässt sich die Pendelbewegung einer Last an dem Seil spürbar simulieren.

Die Bewegungsplatte kann ferner wenigstens einen Sensor aufweisen, mit dem die Kraftübertragung einer Person auf das Seil der Winde erfassbar und an die Simulationsrecheneinheit übertragbar ist. Kraftübertragungen einer Person können so von der Simulation berücksichtigt werden, wodurch es dem Operateur der Winde möglich ist, durch eigene Kraft die Pendelbewegung zu beeinflussen.

In einem Ausführungsbeispiel der Erfindung verläuft das Seil der Winde zwischen zwei Spulen, auf welche das Seil aufrollbar und von denen es abrollbar ist. Diese Spulen befinden sich vorzugsweise außerhalb des Trainingsraums und dienen dazu, das Ab- und Aufspulen des Seiles in den Handflächen des Operateurs spürbar zu machen.

Um die Trainingsobjekte als echt wirkende Modelle nutzbar zu machen, können Teile eines Trainingsobjektes mit der gleichen Farbe für eine farbbasierte Bildfreistellung versehen sein, wie sie die innere Begrenzungsfläche des Trainingsraums aufweist. So können diese Teile der Trainingsobjekte vereinfacht werden, indem stattdessen eine visuelle virtuelle Darstellung des jeweiligen Trainingsobjektes in die Szene eingeblendet wird.

Die Simulationsrecheneinheit kann ferner für eine Waffe Mittel zur Berechnung und Darstellung eines Visierpunkts in den auf einem Head-Mounted-Display dargestellten virtuellen Bildern aufweisen. So kann beispielsweise ein roter Punkt eingeblendet werden. Für eine Rückstoßsimulation kann das Modell der Waffe ein mit CO₂ oder elektrisch betriebenes Recoilsystem aufweisen. Auf diese Weise lässt sich der Rückstoß der Waffe realistisch simulieren.

Mit der Erfindung wird so ein Simulator geschaffen, der als teamfähiges Ausbildungsmittel sowohl das Training der Handhabung der Systeme als auch das Training von taktischen Operationen ermöglicht. Dabei werden die Vorteile verschiedener Technologien geeignet kombiniert, wodurch beispielsweise der Mannschaft eines Helikopters ein gemeinsames und möglichst realistisches Training ermöglicht wird, das zugleich preiswert ist. Der Trainingsraum ist hierbei eine "blaue Bühne", in der Personen in einer virtuellen Kabine gemeinsam trainieren können, wodurch bisherige Problematiken vermeidbar sind. Insbesondere muss kein kostenintensives Ausbildungsmittel konzipiert werden und bei Trainingsinhalten müssen keine Kompromisse gemacht werden. Komplexe Darstellungssysteme werden vermieden, was zur Senkung der Herstellungskosten beiträgt. Auch individuelle Kundenwünsche können vereinfacht berücksichtigt werden und Trainingsräume können leicht ausgetauscht werden.

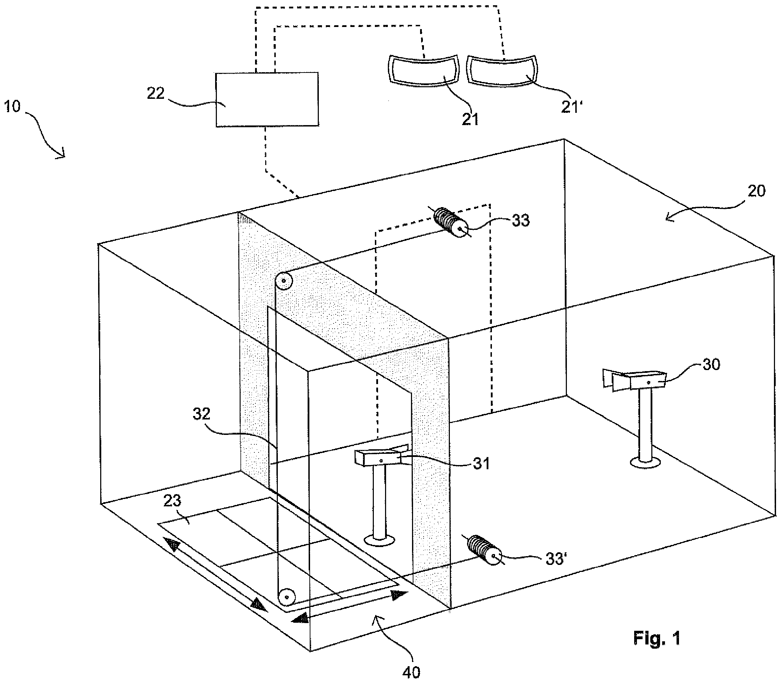

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung in Fig. 1.

Fig. 1 zeigt schematisch ein Ausführungsbeispiel des erfindungsgemäßen Simulators 10 mit einem Trainingsraum 20. Anhand dieses Ausführungsbeispiels wird die Erfindung nachfolgend als Trainer zur Ausbildung der hinteren Kabinencrew eines Helikopters (H/C) näher beschrieben. Sie kann jedoch auch vorteilhaft zur Ausbildung von Besatzungen für militärische oder zivile Landfahrzeuge, Wasserfahrzeugen, von Flugzeugbesatzungen, von Sicherheitspersonal, zum Training von Bedienungsmannschaften für den Betrieb und Notfälle in Maschinenräumen etc. modifiziert und verwendet werden.

Eine realistische (Grund-)Ausbildung an den Systemen, seien es die Maschinengewehre oder die Rettungswinde, setzt möglichst originalgetreue Nachbildungen dieser Systeme voraus, die sich weitestgehend gleich verhalten, wenn nicht sogar identisch sein sollten. Möchte man diese Ausbildung auf ein Zusammenspiel der Crew-Mitglieder während eines gemeinsamen Einsatzes erweitern, so kommt ein gemeinsamer Trainingsraum hinzu. In diesem Fall handelt es sich bei dem Trainingsraum 20 somit um die Nachbildung einer H/C Rear Cabin.

Für die H/C Kabine bedarf es nicht zwingend eines physikalischen Nachbaus der zu simulierenden Hubschraubervariante. Die Kabine ist nur die Hülle und zugleich eine Art Leinwand, so dass die innere Begrenzungsfläche des Trainingsraums 20 vorzugsweise vollständig mit einer Farbe versehen ist, die für eine farbbasierte Bildfreistellung (chroma keying) geeignet ist und es so ermöglicht, einzelne Bereiche durch die Blue-Box-Technik auszumaskieren. Dazu hat sich die Farbe Blau als vorteilhaft erwiesen. Auf die so gebildete Leinwand wird mittels des Blue-Box-Verfahrens das virtuelle Abbild der simulierten Kabine projiziert. Um die Hülle/Kabine in ihrer Dimension von der H/C Kabine unabhängig auslegen zu können, kann vorgesehen sein, dass es keine Kanten und Ecken gibt und der Boden der Kabine sollte ebenfalls Blau eingefärbt werden.

Das Visual System besteht aus zwei grundlegenden Komponenten, nämlich den Bildgeneratoren und den Anzeige-Medien. Die Ausbildung der Bildgeneratoren ist unabhängig von dem zugrundeliegenden Konzept und wird in einer Simulationsrecheneinheit 22 realisiert, welche das gewünschte virtuelle Szenario rechnet und an die Anzeige-Medien und die realen Komponenten des Trainingsraums 20 überträgt.

Dagegen bildet ein teiltransparentes Head-Mounted-Display (HMD) mit Video-see-through-Funktion den Grundstein der Erfindung, so dass der Simulator 10 wenigstens ein HMD 21, 21' aufweist, das in Verbindung mit der Simulationsrecheneinheit 22 steht, um Daten an diese zu senden und Daten zu empfangen. Damit man einen blauen Hintergrund aus den individuellen Blickwinkeln der Crew-Mitglieder erhält, ist jedes HMD mit zwei digitalen Video-Kameras versehen, welche ihre Videodaten an die Simulationsrecheneinheit 22 übertragen. Um den jeweiligen Blickwinkel einer Person festzustellen, ist jedes HMD ferner mit einem Headtracker ausgestattet, der seine Daten ebenfalls an die Simulationsrecheneinheit 22 überträgt. Diese Informationen werden von der Simulationsrecheneinheit 22 verarbeitet und die aufgenommenen Bilder dann an den erfassten blauen Flächen mit einer virtuellen Szene aus demselben Blickwinkel überlagert, indem entsprechende Daten von der Simulationsrecheneinheit 22 an die HMDs übermittelt werden.

Vorzugsweise ist der Trainingsraum 20 frei im Raum beweglich, um Manöver der Kabine simulieren zu können. Dazu kann ein Bewegungssystem vorgesehen sein, dass zweckmäßigerweise sechs Freiheitsgrade (DOF) aufweist. Auch Vibrationen können auf den Boden der Kabine übertragen werden.

Als Arbeitsplätze werden vorzugsweise die Rettungswinde, das Außenlastverfahren und der Bereich des Bordsicherungssoldaten nachgebildet. Dazu sind im Trainingsraum 20 beispielsweise zwei Waffen 30, 31 vorgesehen, die als Modelle (Mock-ups) ausgebildet sind. Dabei können folgende Funktionen/Eigenschaften simuliert werden: Bedienung, Ballistik, Kadenz, Rückstoß und Gewicht.

Die Waffe 30, 31 des Maschinengewehrschützen ist vorzugsweise eine Kombination aus einer 1:1 Replik und einem vereinfachtem Mock-up. Die Griffe können als möglichst realistische Kopien des Originals umgesetzt werden, damit die Bedienung der Waffe inklusive Nachladen, Entsichern und Schießen trainiert werden kann. Die Haptik entspricht dadurch dem originalen Gerät. Die Ausrichtung des Mock-up wird über eigene Lagesensoren ermittelt und an die Simulationsrecheneinheit 20 weiter gegeben.

Der Lauf und die Lafette einer Waffe 30, 31 können vorteilhaft vereinfacht werden. Sofern sie nachgebildet werden, sollten sie dann jedoch in derselben Farbe (z.B. Blau) eingefärbt sein wie die gesamte Kabine 20, um eine virtuelle Darstellung der betreffenden Waffe in die Szene einblenden zu können. Die virtuelle Darstellung der Waffe ist dabei ein photorealistisches 3D-Modell. Dieses 3D-Modell wird dem Mock-up überlagert und ergänzt dieses mit z.B. einem realistischen Lauf und dem Visier.

Eine Visierung mittels rotem Laserpunkt kann ebenfalls innerhalb der simulierten Szene umgesetzt werden. Dies geschieht innerhalb der Bildgeneratoren der Simulationsrecheneinheit 22, indem die Waffenausrichtung mit einer gedachten Linie verlängert, ein gemeinsamer Schnittpunkt mit dem Gelände ermittelt und dort ein Lichtpunkt dargestellt wird. Für die Simulation des Rückstoßes verfügt das Mock-up über ein elektrisches oder mit CO₂ betriebenes Recoil-System. Diese RückstoßSimulation ist schnell genug, um die gegebene Kadenz darzustellen, wobei sie gleichzeitig stark genug ist, um die Rückstoßkräfte nachzubilden. Das Gewicht der Waffe und deren Verteilung können durch entsprechende Ausgleichsgewichte oder einer Kräftesimulation mittels einem Control Load System (CLS) nachgeahmt werden.

Im Trainingsraum 20 ist ferner eine Rettungswinde vorgesehen, die ebenfalls als Modell ausgebildet ist. Die Winde wird über die Rescue Hoist Remote Control Unit bedient bzw. gesteuert, und an ihr werden folgende Funktionen simuliert: Bedienung, Pendelbewegung und Ab-/Aufspulen.

Die Pendelbewegung der Last wird an einem Seil 32 der Rettungswinde mittels einer X/Y-Bewegungsplatte 23 spürbar simuliert. Diese Bewegungsplatte 23 befindet sich vorzugsweise in einer vorgelagerten Hülle 40, in welcher die Mechanik für die Rettungswinde untergebracht ist. Dieser Bereich ist ebenfalls blau eingefärbt. Während sich das obere Ende des Seiles 32 an einem festen Punkt befindet, lässt sich das untere Ende des Seiles bewegen. Die Pendelbewegung einer simulierten Last wird dabei von der Simulationsrecheneinheit 22 in eine relative X/Y-Koordinate (0, 0 in stabiler Ruhestellung) umgerechnet und auf die mit Stellmotoren versehene Bewegungsplatte 23 an das Seilende übertragen. Sensoren an den Achsen der X/Y-Platte erlauben ferner eine Kraftübertragung des Operateurs auf das Seil 32, die ihrerseits an die Simulationsrecheneinheit 22 übertragen wird.

Das Ab- und das Aufspulen des Seiles 32 sollte vorzugsweise ebenfalls in der Handfläche spürbar sein. Hierfür wird das Seil 32 wie bei einer echten Winde von einer ersten Spule 33 abgerollt und am unteren Ende auf einer zweiten Spule 33' zeitgleich aufgerollt, wobei es dazwischen über zwei Rollen umgelenkt werden kann. Die beiden Spulen befinden sich dabei zweckmäßigerweise außerhalb der Kabine, wobei eine Spule 33 oberhalb der Kabine angebracht ist, während die andere Spule 33' unterhalb der Kabine angeordnet ist. Hiermit lässt sich auch die Seilspannung simulieren, die sich beim Aufsetzen der Last auf den Boden verändert. Auch soll so in Momenten, in denen der Operateur an dem Seil zieht, durch asymmetrisches Auf- und Abspulen des Seiles 32 das "Einholen" simuliert werden. Hierbei geht es um die Möglichkeit, das Seil in die Kabine zu ziehen, jedoch nicht darum, dann eine Last ein- bzw. auszuhängen.

Die Trainingsumgebung für das Außenlastverfahren ist praktisch Bestandteil der Ausrüstung der Door Gunner bzw. des Winchman. Ein mit einem HMD ausgestatteter Maschinengewehrschütze oder Bordmechaniker bzw. Bordwart kann während des Außenlastverfahrens sowohl durch eine simulierte Bodenluke, als auch durch die dargestellten Fenster und Türen der H/C Kabine die Außenlast beobachten. Er steht dabei in Kommunikation mit dem Ausbilder und kann gegebenenfalls Informationen oder Kommandos an ihn geben.

### Bezugszeichenliste:

- 10: Simulator, Trainer
- 20: Trainingsraum, Kabine, virtuelle H/C Kabine
- 21, 21': Head-Mounted-Display, HMD
- 22: Simulationsrecheneinheit
- 23: Bewegungsplatte
- 30, 31: Trainingsobjekt, Waffe
- 32: Seil
- 33, 33': Spule
- 40: Hülle

## Patentansprüche

1. Simulator (10) zur Ausbildung von wenigstens einer Person, umfassend einen Trainingsraum (20), dessen innere Begrenzungsfläche mit einer Farbe versehen ist, die für eine farbbasierte Bildfreistellung geeignet ist, wobei der Simulator (10) wenigstens ein teiltransparentes Head-Mounted-Display (21; 21') umfasst, das mit zwei Videokameras für stereoskope Aufnahmen und einem Headtracker versehen ist, der die Feststellung der Blickrichtung des jeweiligen Trägers ermöglicht, und der Simulator (10) ferner eine Simulationsrecheneinheit (22) mit zwei Bildgeneratoren für eine stereoskope Darstellung von virtuellen Bildern auf dem wenigstens einen Head-Mounted-Display (21; 21') umfasst, und die darzustellenden virtuellen Bilder durch einen Videomischer erzeugbar sind, der Mittel zur zeitgleichen Mischung der Aufnahmen der Videokameras des wenigstens einen Head-Mounted-Displays (21; 21') mit gerechneten virtuellen Bildern in der jeweiligen Blickrichtung aufweist, wobei die Aufnahmen der Videokameras mindestens eine Fläche in der Farbe der inneren Begrenzungsfläche des Trainingsraumes enthalten können und diese Flächen mittels des Videomischers mit den entsprechenden virtuellen Bildern überlagert werden.

2. Simulator nach Anspruch 1, **dadurch gekennzeichnet, dass** der Simulator (10) wenigstens zwei teiltransparente Head-Mounted-Displays (21; 21') umfasst, auf welchen von der Simulationsrecheneinheit (22) zeitgleich virtuelle Bilder erzeugbar sind.

3. Simulator nach einem oder beiden der Ansprüche 1 und 2, **dadurch gekennzeichnet, dass** der gesamte Trainingsraum (20) beweglich im Raum ausgeführt ist.

4. Simulator nach einem oder mehreren der Ansprüche 1 bis 3, **dadurch gekennzeichnet, dass** der Boden von den Seitenwänden des Trainingsraums (20) entkoppelbar ist.

5. Simulator nach einem oder mehreren der Ansprüche 1 bis 4, **dadurch gekennzeichnet, dass** der Trainingsraum (20) wenigstens ein reales Trainingsobjekt (30; 31) aufweist.

6. Simulator nach Anspruch 5, **dadurch gekennzeichnet, dass** das Trainingsobjekt eine Waffe (30; 31) und/oder eine Winde, jeweils als Original oder Modell, ist.

7. Simulator nach Anspruch 6, **dadurch gekennzeichnet, dass** ein Seil (32) der Winde an eine Bewegungsplatte (23) angekoppelt ist, die innerhalb einer Ebene in zwei Richtungen bewegbar ist, wobei die Bewegungsplatte (23) durch die Simulationsrecheneinheit (22) ansteuerbar ist.

8. Simulator nach Anspruch 7, **dadurch gekennzeichnet, dass** die Bewegungsplatte (23) wenigstens einen Sensor aufweist, mit dem die Kraftübertragung einer Person auf das Seil (32) der Winde erfassbar und an die Simulationsrecheneinheit (22) übertragbar ist.

9. Simulator nach einem oder mehreren der Ansprüche 6 bis 8, **dadurch gekennzeichnet, dass** das Seil (32) der Winde zwischen zwei Spulen (33; 33') verläuft, auf welche das Seil (32) aufrollbar und von denen es abrollbar ist.

10. Simulator nach Anspruch 9, **dadurch gekennzeichnet, dass** sich die zwei Spulen (33; 33') außerhalb des Trainingsraums (20) befinden.

11. Simulator nach einem oder mehreren der Ansprüche 5 bis 10, **dadurch gekennzeichnet, dass** Teile eines Trainingsobjektes (30; 31) mit der gleichen Farbe für eine farbbasierte Bildfreistellung versehen sind, wie sie die innere Begrenzungsfläche des Trainingsraums (20) aufweist.

12. Simulator nach einem oder mehreren der Ansprüche 6 bis 11, **dadurch gekennzeichnet, dass** die Simulationsrecheneinheit (22) für eine Waffe (30; 31) Mittel zur Berechnung und Darstellung eines Visierpunkts in den auf einem Head-Mounted-Display (21; 21') dargestellten virtuellen Bildern aufweist.

13. Simulator nach einem oder mehreren der Ansprüche 6 bis 12, **dadurch gekennzeichnet, dass** die Waffe (30; 31) für eine Rückstoßsimulation ein mit CO₂ oder elektrisch betriebenes Recoilsystem aufweist.

## Claims

1. Simulator (10) for the training of at least one person, comprising a training room (20), whose inner delimiting surface is provided with a color that is suitable for chroma keying, wherein the simulator (10) comprises at least one partially transparent head-mounted display (21; 21'), which is provided with two video cameras for stereoscopic images and a head tracker, which enables determination of the viewing direction of the respective wearer, and the simulator (10) further comprises a simulation computing unit (22) with two image generators for stereoscopic illustration of virtual images on the at least one head-mounted display (21; 21'), and the virtual images to be represented can be generated by a video mixer comprising a means for simultaneous mixing of the images of the video cameras of the at least one head-mounted display (21; 21') with computed virtual images in the respective viewing direction, wherein the images of the video cameras may contain at least one area in the color of the inner delimiting surface of the training room and these areas are overlaid with the corresponding virtual images by means of the video mixer.

2. Simulator according to Claim 1, **characterized in that** the simulator (10) comprises at least two partially transparent head-mounted displays (21; 21'), on which virtual images can be generated by the simulation computing unit (22) at the same time.

3. Simulator according to one or both of Claims 1 and 2, **characterized in that** the entire training room (20) is implemented so as to be movable in space.

4. Simulator according to one or more of Claims 1 to 3, **characterized in that** the floor can be decoupled from the side walls of the training room (20).

5. Simulator according to one or more of Claims 1 to 4, **characterized in that** the training room (20) comprises at least one real training object (30; 31).

6. Simulator according to Claim 5, **characterized in that** the training object is a weapon (30; 31) and/or a winch, in each case as an original or a model.

7. Simulator according to Claim 6, **characterized in that** a cable (32) of the winch is coupled to a motion plate (23) that is movable in two directions within a plane, wherein the motion plate (23) can be controlled by the simulation computing unit (22).

8. Simulator according to Claim 7, **characterized in that** the motion plate (23) comprises at least one sensor, with which the force transfer of a person to the cable (32) of the winch can be detected and can be transmitted to the simulation computing unit (22).

9. Simulator according to one or more of Claims 6 to 8, **characterized in that** the cable (32) of the winch runs between two reels (33; 33'), onto which the cable (32) can be reeled and from which it can be unreeled.

10. Simulator according to Claim 9, **characterized in that** the two reels (33; 33') are disposed outside the training room (20).

11. Simulator according to one or more of Claims 5 to 10, **characterized in that** parts of a training object (30; 31) are provided with the same color as the inner delimiting surface of the training room (20) for chroma keying.

12. Simulator according to one or more of Claims 6 to 11, **characterized in that** the simulation computing unit (22) for a weapon (30; 31) comprises means for the calculation and illustration of a sighting point in the virtual images represented on a head-mounted display (21; 21').

13. Simulator according to one or more of Claims 6 to 12, **characterized in that** the weapon (30; 31) comprises a recoil system operated with CO₂ or operated electrically for a recoil simulation.

## Revendications

1. Simulateur (10) destiné à la formation d'au moins une personne, comprenant une salle d'entraînement (20) dont la surface de délimitation intérieure est dotée d'une couleur qui est adaptée à un détourage d'image basé sur la couleur, le simulateur (10) comprenant au moins un visiocasque (21 ; 21') partiellement transparent qui est pourvu de deux caméras vidéo pour des enregistrements stéréoscopiques et d'un dispositif de suivi de la tête qui permet de définir la direction d'observation du porteur respectif, et le simulateur (10) comprenant en outre une unité de calcul de simulation (22) pourvue de deux générateurs d'image pour une représentation stéréoscopique d'images virtuelles sur l'au moins un visiocasque (21 ; 21'), et les images virtuelles à représenter peuvent être générées par un mélangeur vidéo qui possède des moyens servant au mélange simultané des enregistrements des caméras vidéo de l'au moins un visiocasque (21 ; 21') avec des images virtuelles calculées dans la direction d'observation respective, les enregistrements des caméras vidéo pouvant contenir au moins une surface dans la couleur de la surface de délimitation intérieure de la salle d'entraînement et ces surfaces étant superposées au moyen du mélangeur vidéo avec les images virtuelles correspondantes.

2. Simulateur selon la revendication 1, **caractérisé en ce que** le simulateur (10) comprend au moins deux visiocasques (21 ; 21') partiellement transparents sur lesquels des images virtuelles peuvent être générées simultanément par l'unité de calcul de simulation (22).

3. Simulateur selon l'une ou les deux des revendications 1 et 2, **caractérisé en ce que** l'ensemble de la salle d'entraînement (20) est réalisée mobile dans l'espace.

4. Simulateur selon une ou plusieurs des revendications 1 à 3, **caractérisé en ce que** le fond peut être désaccouplé des parois latérales de la salle d'entraînement (20).

5. Simulateur selon une ou plusieurs des revendications 1 à 4, **caractérisé en ce que** la salle d'entraînement (20) possède au moins un objet d'entraînement (30 ; 31) réel.

6. Simulateur selon la revendication 5, **caractérisé en ce que** l'objet d'entraînement est une arme (30 ; 31) et/ou un treuil, respectivement sous la forme d'un original ou d'une maquette.

7. Simulateur selon la revendication 6, **caractérisé en ce qu'**un câble (32) du treuil est accouplé à une plaque mobile (23) qui peut être déplacée à l'intérieur d'un plan dans deux directions, la plaque mobile (23) pouvant être commandée par l'unité de calcul de simulation (22).

8. Simulateur selon la revendication 7, **caractérisé en ce que** la plaque mobile (23) possède au moins un capteur qui permet de détecter la transmission de force d'une personne sur le câble (32) du treuil et de la transmettre à l'unité de calcul de simulation (22).

9. Simulateur selon une ou plusieurs des revendications 6 à 8, **caractérisé en ce que** le câble (32) du treuil s'étend entre deux bobines (33 ; 33') sur lesquelles le câble (32) peut être enroulé et desquelles il peut être déroulé.

10. Simulateur selon la revendication 9, **caractérisé en ce que** les deux bobines (33 ; 33') se trouvent en-dehors de la salle d'entraînement (20).

11. Simulateur selon une ou plusieurs des revendications 5 à 10, **caractérisé en ce qu'**une partie d'un objet d'entraînement (30 ; 31) est doté de la même couleur pour un détourage d'image basé sur la couleur que celle que présente la surface de délimitation intérieure de la salle d'entraînement (20).

12. Simulateur selon une ou plusieurs des revendications 6 à 11, **caractérisé en ce que** l'unité de calcul de simulation (22) pour une arme (30 ; 31) possède des moyens destinés au calcul et à la représentation d'un point de visée sur les images virtuelles représentées sur un visiocasque (21 ; 21').

13. Simulateur selon une ou plusieurs des revendications 6 à 12, **caractérisé en ce que** l'arme (30 ; 31) possède un système de recul à entraînement par CO₂ ou électrique pour une simulation du recul.
